# EUROPÄISCHE PATENTANMELDUNG

(11) **EP 1 519 092 A1**
(43) Veröffentlichungstag der Anmeldung: **30.03.2005**
(21) Anmeldenummer: 03400056.2
(22) Anmeldetag: 24.09.2003
(51) Int. Cl.: F16L 5/08, F16L 5/04

(54) **Verfahren zur Abdichtung von Leitungen in Wanddurchbrüchen**

(71) Anmelder: Ekat, Tony, 18209 Bad Dobern (DE)
(72) Erfinder: Ekat, Tony, 18209 Bad Dobern (DE)
(74) Vertreter: UEXKÜLL & STOLBERG

(57) **Zusammenfassung**

Die Erfindung betrifft ein Verfahren zur Abdichtung von Leitungen in Wanddurchbrüchen. Bei dem Verfahren wird ein elastischer Dichtungsring (2), die hindurchgeführte Leitung (6) im Wesentlichen spielfrei umfassend, in Anlage an die den Wanddurchbruch umgebende Wand (1) gebracht; ein Pressring (3), der die hindurchgeführte Leitung umfasst, wird in Anlage an die von der Wand (1) abgewandte Seite des Dichtungsrings (2) gebracht; wenigstens zwei Befestigungsmittel (5) werden durch den Pressring (3), den Dichtungsring (2) und die den Wanddurchbruch umgebende Wand (1) hindurch verlaufend eingebracht und angezogen, um den Pressring (3) in Richtung auf die den Wanddurchbruch umgebende Wand (1) gegen den Dichtungsring (2) zur Abdichtung anzudrücken und diesen zu komprimieren, so dass Material des Dichtungsrings auch nach Innen, abdichtend gegen die Außenfläche der hindurchgeführten Leitung (6) gepresst wird.

## Beschreibung

Die Erfindung betrifft ein Verfahren zum Abdichten von Leitungen in Wanddurchbrüchen. Solche Abdichtungen werden z.B. für brandsichere Durchführungen von Leitungen durch Schotte und Decks im Schiffbau benötigt. Der Begriff Leitung wird im Zusammenhang der vorliegenden Erfindung in einem allgemeinen Sinne verwendet und soll Rohre, Kabel, Rohrbündel und Kabelbündel umfassen.

Eine bekannte Dichtungsvorrichtung ist z.B. in WO 01/09538 A1 beschrieben. Sie weist ein Futterrohr oder Gehäuse auf, das in einem Wanddurchbruch, z.B. durch Schweißen, zu befestigen ist. Zur Abdichtung eines durch das Futterrohr durchzuführenden Rohres sind Dichtungsmanschetten vorgesehen. Die Dichtungsmanschette weist einen Grundkörper aus elastischem Material auf, an dessen Außenfläche umlaufende Sägezahnrippen gebildet sind, die beim Einschieben der Dichtungsmanschette unter Andruck an die Innenfläche des Futterrohrs deformiert werden. Die Dichtungsmanschette weist eine Aufnahmeöffnung für das hindurchzuführende Rohr auf, wobei an der Innenfläche der Aufnahmeöffnung umlaufende Innenrippen gebildet sind, die zum dichtenden Kontakt mit der Außenfläche des Futterrohres vorgesehen sind. Die Dichtungsmanschette wird, eng anliegend auf der hindurchzuführenden Leitung sitzend, in das Futterrohr eingetrieben, um so eine Dichtung zu bilden. Die Dichtung wird hier also durch die Dichtungsmanschette gebildet, die im Presssitz zwischen der hindurchgeführten Leitung und der Innenwand des in den Wanddurchbruch eingebauten Futterrohrs sitzt. Dieses Verfahren zum Aufbau einer Abdichtung in einem Wanddurchbruch ist zum einen aufwendig, weil ein Futterrohr z.B. durch Schweißen in dem Wanddurchbruch befestigt werden muss; zum anderen muss für den Wanddurchbruch eine Öffnungsfläche geschaffen werden, die erheblich größer als der Querschnitt der hindurchzuführenden Leitung ist, da darin auch Futterrohr und Dichtungsmanschette eingbaut werden müssen. Außerdem ist das Gewicht der Durchführung durch das Futterrohr relativ groß. Schließlich kann die Leitung nur zentriert durch den Wanddurchbruch hindurchgeführt werden.

Es sind ferner sogenannte Ringraumdichtungen bekannt, um Leitungen in Futterrohren abzudichten. Diese bestehen aus elastischen Dichtungsringen, die durch gegenüberliegende Pressringe zusammenpressbar ist, um eine durchzuführende Leitung in einem Futterrohr abzudichten. Wiederum wird hier also der Freiraum zwischen der Außenfläche der hindurchgeführten Leitung und der radial weiter außen liegenden Innenfläche des Futterrohrs durch verpresstes Dichtungsmaterial aufgefüllt und abgedichtet. Auch dieses Verfahren ist nachteilig, da der Wanddurchbruch mit erheblich größeren Abmessungen als die hindurchgeführte Leitung geschnitten werden muss, damit um die Leitung herum noch die Ringraumdichtung und das Futterrohr in dem Wanddurchbruch Platz finden. Überdies ergeben sich die gleichen Nachteile wie bei dem zuvor beschriebenen Stand der Technik, nämlich dass ein Futterrohr durch Schweißen in dem Wanddurchbruch befestigt werden muss, wobei wiederum der Wanddurchbruch mit einer Öffnungsfläche geschaffen werden muss, die erheblich größer als der Querschnitt der hindurchzuführenden Leitung ist, da darin auch Futterrohr und Dichtungsmanschette eingbaut werden müssen. Außerdem ist das Gewicht der Durchführung durch das Futterrohr relativ hoch.

Aus EP 0 964 196 A1 ist eine Abdichtung für eine Wanddurchführung für eine Leitung bekannt, die drei, die hindurchgeführte Leitung umfassende Pressringe aufweist. Zwischen dem ersten und zweiten Pressring ist eine um die hindurchgeführte Leitung umlaufende Nut gebildet, in der ein O-Ring angeordnet ist. Zwischen dem zweiten und dem dritten Pressring, die jeweils außen in Anlage an die den Wanddurchbruch umgebende Wand kommen, ist in dem radialen Zwischenraum zwischen der hindurchgeführten Leitung und der Innenwand der Wanddurchbruchsöffnung eine Brandschutzdichtung vorgesehen. Ferner ist zwischen dem zweiten Pressring und der zugewandten, den Wanddurchbruch umgebenden Wand ein Dichtungsring eingelegt. Eine Mehrzahl von Befestigungsmitteln in Form von Gewindestangen und Muttern ist vorgesehen, die durch die drei Pressringe und die Brandschutzdichtung hindurchverlaufend eingebracht und angezogen werden, damit der O-Ring zwischen dem ersten und zweiten Pressring gegen die Außenfläche der Leitung gedrückt und der Dichtungsring zwischen dem zweiten Pressring und der den Wanddurchbruch umgebenden Wand abdichtend komprimiert wird. Dieses Verfahren zum Schaffen einer Abdichtung ist zum einen auf Grund der Anordnung von drei Pressringen relativ aufwendig und kompliziert. Darüberhinaus wird ein gesonderter O-Ring benötigt, um die Abdichtung gegenüber der hindurchgeführten Leitung zu bewirken, während separat davon der Dichtungsring zwischen dem zweiten Pressring und der den Wanddurchbruch umgebenden Wand eine weitere Dichtung schafft. Weiterhin muss der Wanddurchbruch einen Innendurchmesser haben, der erheblich größer als der Außendurchmesser der hindurchgeführten Leitung ist, da zwischen der Außenfläche der hindurchgeführten Leitung und dem Innenrand des Wanddurchbruchs eine Brandschutzdichtung vorgesehen ist, die eine hinreichende Materialstärke benötigt, so dass ein großer Zwischenraum vorhanden sein muss.

Die zuvor beschriebene Anordnung ist auch nachteilig, da drei Pressringe benötigt werden, deren Aufbau kompliziert ist und die ein hohes Gewicht haben, was insbesondere im Schiffbau nachteilig ist. Ferner ist die Installation mit vulkanisiertem O-Ring nur vor Verlegen der Leitung möglich, d.h. es ist kein nachträglicher Einbau möglich, da sonst der O-Ring nicht um die Leitung gelegt werden kann. Außerdem ist die Anordnung nicht zur Durchführung von Rohr- oder Kabelbündeln geeignet. Ferner kann die Anordnung nur Leitungen aufnehmen, die zentriert durch den Wanddurchbruch hindurchgeführt werden.

Es ist Aufgabe der vorliegenden Erfindung, ein einfaches und kostengünstig durchführbares Verfahren zum Aufbau einer Abdichtung einer Leitung in einem Wanddurchbruch anzugeben.

Zur Lösung dieser Aufgabe dient das Verfahren mit den Merkmalen des Patentanspruchs 1. Vorteilhafte Ausführungsformen des Verfahrens sind in den Unteransprüchen angegeben.

Gemäß der vorliegenden Erfindung wird ein elastischer Dichtungsring, vorzugsweise im Wesentlichen spielfrei, um die hindurchgeführte Leitung und in Anlage an die den Wanddurchbruch umgebende Wand angelegt. Der Wanddurchbruch kann vorteilhafterweise nur minimal größer als der Außendurchmesser der hindurchgeführten Leitung sein. Anschließend wird ein Pressring, der die hindurchgeführte Leitung umfasst, in Anlage an die von der Wand abgwandten Seite des Dichtungsrings gebracht. Daraufhin werden wenigstens zwei Befestigungsmittel durch den Pressring, den Dichtungsring und die den Wanddurchbruch umgebende Wand verlaufend eingebracht und angezogen, um den Pressring in Richtung auf die den Wanddurchbruch umgebende Wand gegen den Dichtungsring anzudrücken und Letzteren zu komprimieren, so dass Material des Dichtungsrings auch nach innen verdrängt und in Richtung gegen die Außenfläche der hindurchgeführten Leitung abdichtend angepresst wird.

Es ist ein besonderer Vorteil des vorliegenden Verfahrens, dass nur sehr wenige Teile zum Aufbau der Dichtung benötigt werden. Ferner ist es ein erheblicher Vorteil der vorliegenden Erfindung, dass der Wanddurchbruch selbst nur geringfügig größer als die hindurchzuführende Leitung sein muss, so dass mit erheblich kleineren Wanddurchbruchsöffnungen gearbeitet werden kann. Ferner wird kein Futterohr wie bei dem meisten bekannten Verfahrensweisen benötigt. Außerdem entfällt auch die Notwendigkeit von Schweißarbeiten, die bei den meisten bekannten Verfahren zur Abdichtung von Leitungen in Wanddurchbrüchen durchgeführt werden müssen. Im übrigen muss die Leitung nicht notwendig zentriert durch den Wanddurchbruch verlaufen. Insgesamt ist die mit dem Verfahren erstellte Dichtung wesentlich leichter als die mit bekannten Verfahren realisierbaren.

Das mit dem Verfahren der vorliegenden Erfindung herzustellende Dichtungssystem zeichnet sich dadurch aus, dass entgegen allen bekannten Verfahren gemäß der Erfindung mittels eines einzigen primären Dichtungsrings eine direkte Abdichtung zwischen der den Durchbruch umgebenden Wandfläche und der Leitung hergestellt werden kann. Der Dichtungsring schafft zum einen direkt eine Abdichtung zu der den Wanddurchbruch umgebenden Wandfläche hin, und zum anderen wird derselbe Dichtungsring radial nach innen zu der Leitung hin angedrückt, um dadurch auch dort eine Abdichtung zu schaffen.

In einer vorteilhaften Ausführungsform wird die Dichtung symmetrisch auf beiden Seiten des Wanddurchbruchs aufgebaut, indem jeweils ein elastischer Dichtungsring die hindurchgeführte Leitung im Wesentlichen spielfrei umfassend in Anlage an jede Wanddurchbruch umgebende Wandseite gebracht wird; anschließend wird jeweils ein Pressring, der die hindurchgeführte Leitung umfasst, in Anlage an die von der Wand abgewandte Seite jedes Dichtungsrings gebracht, und werden die wenigstens zwei Befestigungsmittel durch die Dichtungsringe, die Pressringe und die den Wanddurchbruch umgebende Wand hindurchverlaufend eingebracht und angezogen, um jeden Pressring in Richtung auf die den Wanddurchbruch umgebende Wand gegen den jeweiligen Dichtungsring zur Abdichtung anzudrücken und zu komprimieren, so dass Material jedes Dichtungsrings auch nach innen, abdichtend gegen die Außenfläche der hindurchgeführten Leitung gepresst wird.

In einer weiteren vorteilhaften Ausführungsform wird vor dem Anziehen der Befestigungsmittel um den oder jeden Dichtungsring ein oder jeweils ein Einfassungsring angebracht, der den Umfang des Dichtungsrings umfasst, so dass beim Komprimieren des Dichtungsrings das Material nicht radial nach außen verdrängt werden kann. Dadurch wird der abdichtende Andruck des Dichtungsmaterials nach innen, auf die Außenfläche der hindurchgeführten Leitung konzentriert. Diese Verfahrensweise ist besonders vorteilhaft, wenn sie in Verbindung mit einer weiteren bevorzugten Ausführungsform verwendet wird, in der Dichtungsringe aus im Brandfall durch Aufschäumen expandierendem Material verwendet werden. Im Brandfall verstärkt die Expansion des Dichtungsmaterials, die auf Grund des Einschlusses des Dichtungsmaterials durch den Pressring und den Einfassungsring am äußeren Umfang, nach innen gerichtet ist die Verpressung der Dichtung; im Fall von brennbaren Rohren können diese, wenn Sie im Brandfall erweichen, durch das nach innen expandierende Dichtungsmaterial zusammengedrückt und abgekniffen werden, so dass sich der Brand nicht über das brennbare Rohr durch den Wanddurchbruch ausbreiten kann. Es werden solche Dichtungsringe aus im Brandfall expandierenden Material verwendet, die eine solche Materialmenge aufweisen, dass der Wanddurchbruch im Brandfall durch das aufschäumende Material vollkommen geschlossen wird.

In einer vorteilhaften Ausführungsform werden Pressringe aus zwei oder mehr Teilen verwendet, die um die hindurchgeführte Leitung gelegt werden, um den Pressring zu bilden.

In einer weiteren vorteilhaften Ausführungsform werden Dichtungsringe aus zwei oder mehr Teilen verwendet, die um die hindurchgeführte Leitung gelegt werden, um den Dichtungsring zu bilden.

In einer weiteren vorteilhaften Ausführungsform werden Einfassringe aus zwei oder mehr Teilen zusammengesetzt, die jeweils um den Dichtungsring gelegt werden, und miteinander verbunden werden, um den Umfangsrand des Dichtungsrings zu fassen.

Wie eingangs erwähnt soll der Begriff Leitung im Zusammenhang der vorliegenden Erfindung in einem allgemeinen Sinne verstanden werden und sowohl Rohre als auch Kabel und dergleichen umfassen. Grundsätlich sollen auch Bündel einzelner Kabel oder Rohre als Leitungen gelten.

Die Erfindung wird im Folgenden anhand von Ausführungsbeispielen in den Zeichnungen erläutert, in denen:
- Figur 1: eine mit einer ersten Ausführungsform des Verfahrens aufgebaute Abdichtung in seitlichem Schnitt zeigt;
- Figur 2: die Abdichtung aus Figur 1 teilweise aufgeschnitten in perspektivischer Darstellung zeigt;
- Figur 3: eine mit einer zweiten Ausführungsform des Verfahrens aufgebaute Abdichtung in seitlichem Schnitt zeigt;
- Figur 4: die Abdichtung aus Figur 3 teilweise aufgeschnitten in perspektivischer Darstellung zeigt;
- Figur 5: eine mit einer dritten Ausführungsform des Verfahrens aufgebaute Abdichtung in seitlichem Schnitt zeigt;
- Figur 6: die Abdichtung aus Figur 5 teilweise aufgeschnitten in perspektivischer Darstellung zeigt.

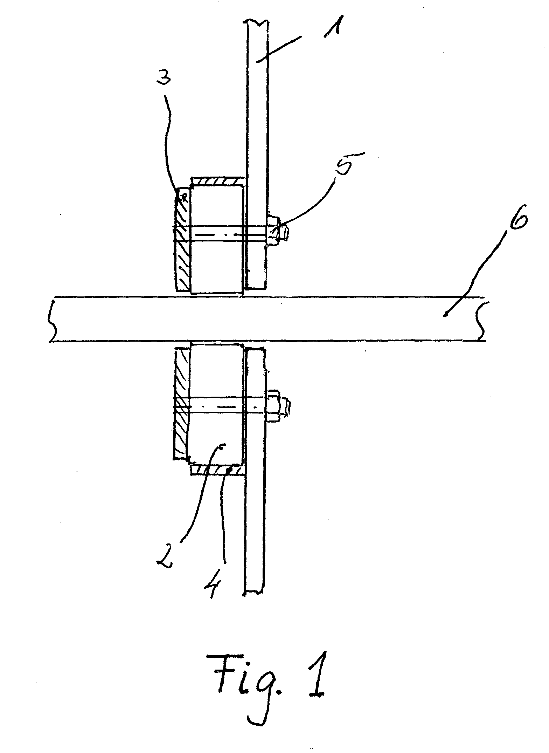

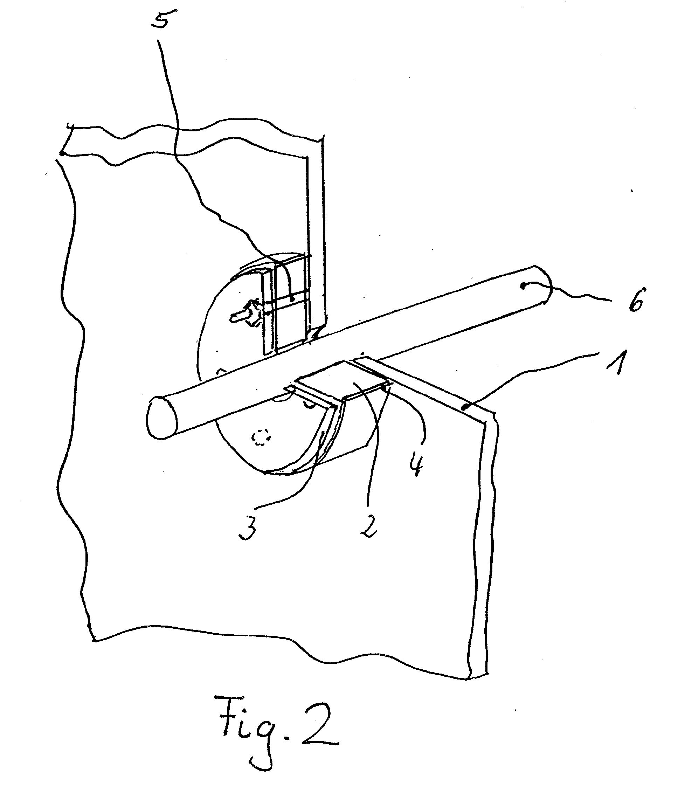

Bei dem Ausführungsbeispiel nach Figuren 1 und 2 wird in der Wand 1, z.B. einer Stahlwand in einem Schiff, ein Durchbruch bereitgestellt, dessen Innendurchmesser den Außendurchmesser der hindurchzuführenden Leitung 6 nur minimal übersteigen muss. Anschließend wird ein elastischer Dichtungsring 2, der vorzugsweise aus zwei Teilen besteht, um die hindurchgeführte Leitung 6, die er im Wesentlichen spielfrei umfasst, gelegt und in Anlage an die den Wanddurchbruch umgebende Wand 1 gebracht. Anschließend wird ein Pressring 3, dessen Innendurchmesser den Außendurchmesser der hindurchgeführten Leitung 6 nur geringfügig übersteigt, und der vorzugsweise ebenfalls aus zwei Teilen besteht, um die hindurchgeführte Leitung 6 gelegt, und in Anlage an den elastischen Dichtungsring 2 gebracht. Danach werden zwei Befestigungsmittel, hier in Form von Gewindestangen, die durch den Pressring 3, den Dichtungsring 2 und die den Wanddurchbruch umgebende Wand 1 verlaufen, eingebracht und jeweils mittels einer Mutter angezogen. Dadurch wird der Pressring 3 in Richtung auf die Wand 1 zu gezogen und verpresst und komprimiert dadurch den Dichtungsring 2. Dadurch wird auch Dichtungsmaterial radial nach innen verdrängt und an die Außenfläche der hindurchgeführten Leitung 6 abdichtend angepresst.

In der dargestellten Ausführungsform ist außerdem vor dem Verpressen des Dichtungsrings 2 um dessen Außenumfang ein Einfassungsring 4 gelegt, der den Außenumfang des Dichtungsrings 2 umfasst. Der Einfassungsring 4 besteht wie der Pressring 3 vorzugsweise aus Metallblech. Durch den Einfassungsring 4 wird verhindert, dass bei der Kompression des Dichtungsrings 2 Dichtungsmaterial nach außen verdrängt werden kann, so dass die Verpressung an der hindurchgeführten Leitung 6 konzentriert wird. Der Innenrand des Einfassungsrings 4 liegt vorzugsweise radial etwas weiter außen als der Außenrand des Pressrings 3.

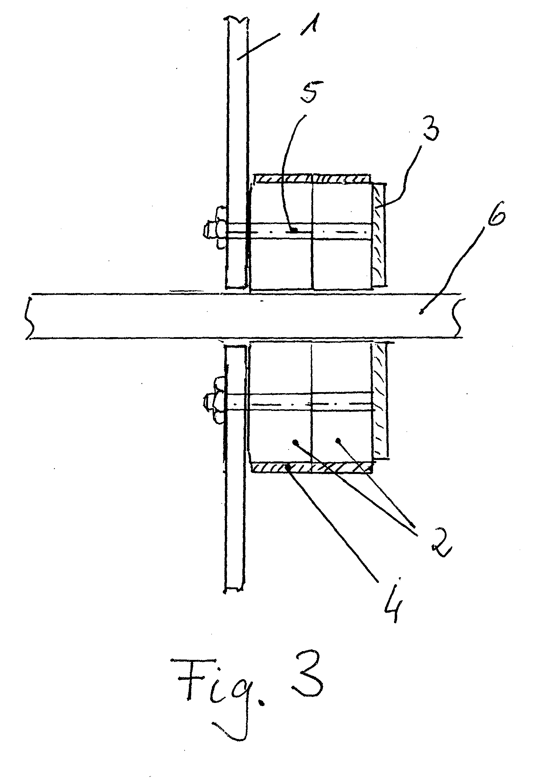

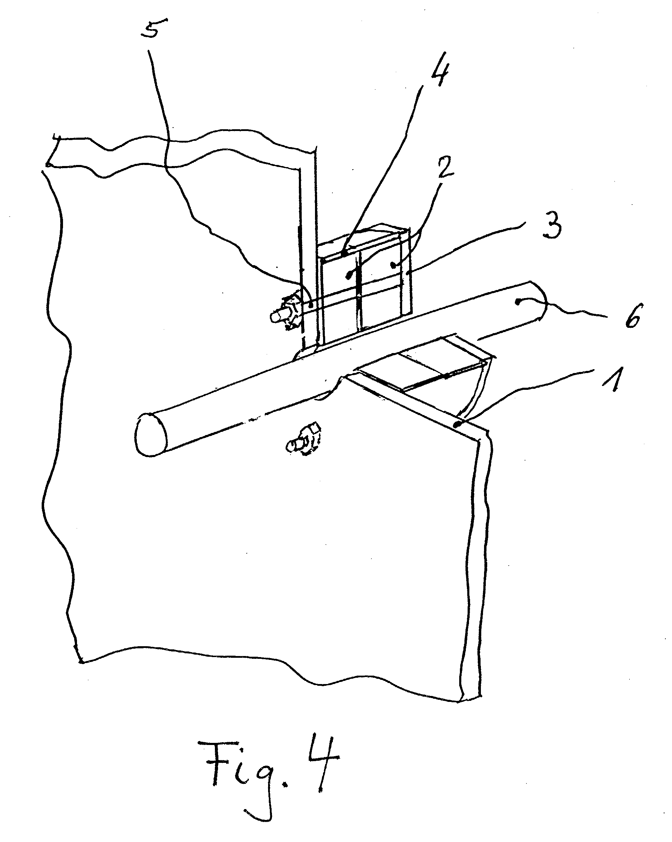

Figuren 3 und 4 zeigen eine alternative Ausführungsform, die sich von der in den Figuren 1 und 2 gezeigten dadurch unterscheidet, dass in Längsrichtung der hindurchgeführten Leitung 6 zwei separate Dichtungsringe 2 hintereinanderliegend um die hindurchgeführte Leitung 6 gelegt werden, bevor der Pressring 3 und der Einfassungsring 4 angelegt werden und die Dichtung verpresst wird. Zwischen den beiden Dichtungsringen 2 kann auch eine Trennscheibe vorgesehen sein.

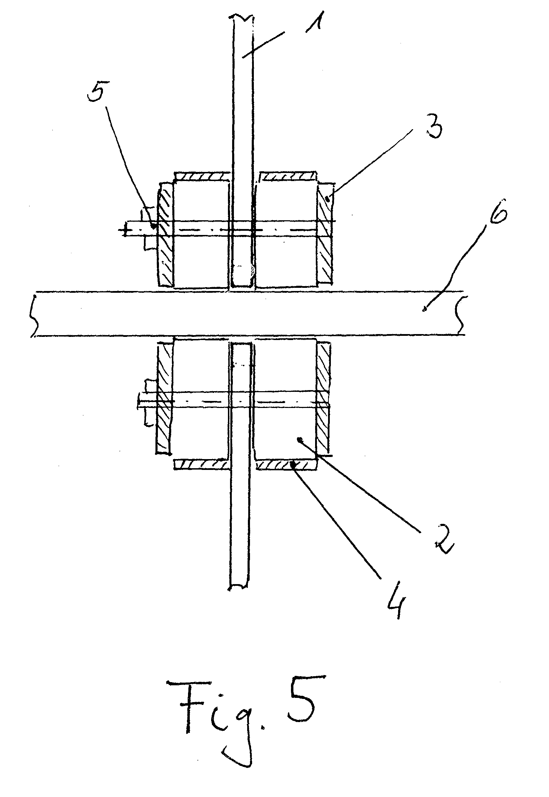

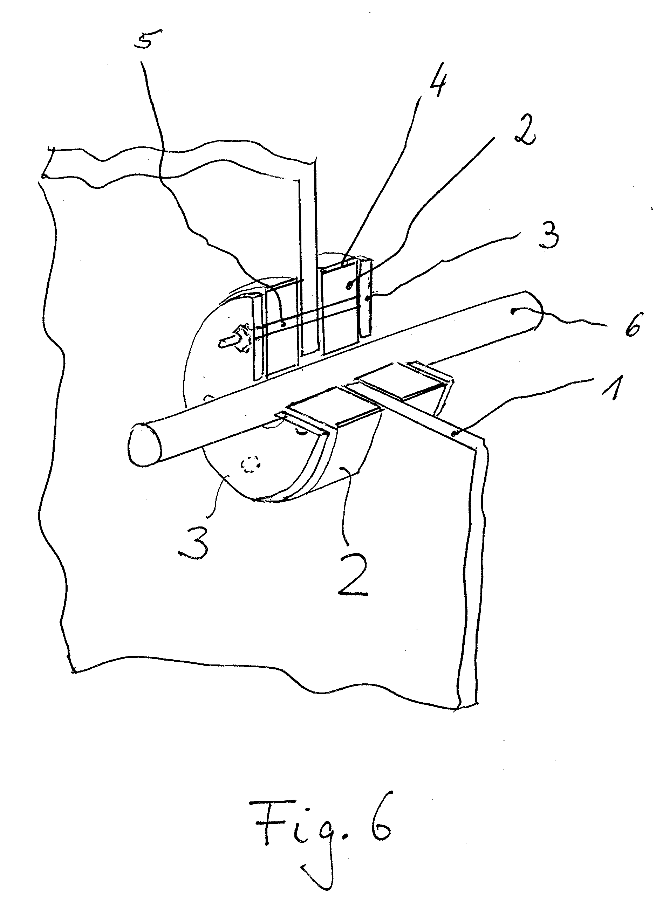

Figuren 5 und 6 zeigen eine weitere alternative Ausführungsform, bei der auf jeder Seite der Wand 1 ein Dichtungsring 2 in Anlage an die den Wanddurchbruch umgebende Wand und die hindurchgeführte Leitung 6 umfassend angelegt werden. Anschließend wird auf jeder Wand abgewandten Seite des Dichtungsrings 2 ein Pressring 3 angeordnet und werden die äußeren Umfänge der Dichtungsringe 2 durch Einfassungsringe 4 eingefasst. Daraufhin werden die Dichtungsringe durch Anziehen der Befestigungsmittel 5 komprimiert, so dass Dichtungsmaterial nach innen verdrängt und gegen die Außenfläche der hindurchgeführten Leitung 6 gepresst wird.

In den dargestellten Ausführungsformen sind die Dichtungsringe 2 jeweils mit einer mittigen Durchgangsöffnung zur Hindurchführung einer Leitung versehen. Grundsätzlich besteht auch die Möglichkeit, jeden Dichtungsring mit einer Mehrzahl von Durchgängen zur Hindurchführung von jeweils einer oder mehreren Leitungen zu versehen. In einer vorteilhaften Ausführungsform können diese Durchführungen gegenüber den hindurchzuführenden Leitungen so weit überdimensioniert sein, dass ein weites Spektrum von möglichen Leitungen hindurchgeführt werden kann. In diese können dann herkömmliche Ringraumdichtungen oder Dichtstopfen mit verschiedenen Innendurchmessern eingesetzt werden, um passgenau auf die aktuell hindurchzuführende Leitung zu passen. Dadurch entfällt die Notwendigkeit zur Bereithaltung von Dichtungsringen mit verschiedenen Durchgangsdurchmessern. Auch bei nur einer hindurchzuführenden Leitung kann ein Dichtungsring mit einem überdimensionierten Durchgangsdurchmesser verwendet werden, wobei dann eine elastische Manschette auf der hindurchzuführenden Leitung dazu verwendet wird, um die Leitung an den Innendurchmesser des Dichtungsringsdurchgangs anzupassen.

## Patentansprüche

1. Verfahren zur Abdichtung von Leitungen in Wanddurchbrüchen, bei dem:
ein elastischer Dichtungsring (2) die hindurchgeführte Leitung (6) im Wesentlichen spielfrei umfassend in Anlage an die den Wanddurchbruch umgebende Wand (1) gebracht wird,
ein Pressring (3), der die hindurchgeführte Leitung umfasst, in Anlage an die von der Wand (1) abgewandte Seite des Dichtungsrings (2) gebracht wird,
wenigstens zwei Befestigungsmittel (5) durch den Pressring (3), den Dichtungsring (2) und die den Wanddurchbruch umgebende Wand (1) hindurch verlaufend eingebracht und angezogen werden, um den Pressring (3) in Richtung auf die den Wanddurchbruch umgebende Wand (1) gegen den Dichtungsring (2) zur Abdichtung anzudrücken und diesen zu komprimieren, so dass Material des Dichtungsrings auch nach Innen, abdichtend gegen die Außenfläche der hindurchgeführten Leitung (6) gepresst wird.

2. Verfahren nach Anspruch 1, bei dem der elastischer Dichtungsring (2) die hindurchgeführte Leitung (6) im Wesentlichen spielfrei umfassend in Anlage an die den Wanddurchbruch umgebende Wand (1) gebracht wird.

3. Verfahren nach Anspruch 1, bei dem der elastischer Dichtungsring (2) die hindurchgeführte Leitung (6) mit einem Zwischenraum umfassend in Anlage an die den Wanddurchbruch umgebende Wand (1) gebracht wird und eine elastische Dichtungsmanschette die Leitung umfassend in den Zwischenraum zu dem Dichtungsring eingeführt wird.

4. Verfahren nach einem der vorhergehenden Ansprüche, bei dem jeweils ein elastischer Dichtungsring (2) die hindurchgeführte Leitung (6) umfassend in Anlage an jede Wanddurchbruch umgebende Wandseite gebracht wird,
jeweils ein Pressring (3), der die hindurchgeführte Leitung (6) umfasst, in Anlage an die von der Wand (1) abgewandte Seite jedes Dichtungsrings (2) gebracht wird, und
die wenigstens zwei Befestigungsmittel (5) durch die Dichtungsringe (2), die Pressringe (3) und die den Wanddurchbruch umgebende Wand (1) hindurchverlaufend eingebracht und angezogen werden, um jeden Pressring (3) in Richtung auf die den Wanddurchbruch umgebende Wand (1) gegen den jeweiligen Dichtungsring (2) zur Abdichtung anzudrücken und zu komprimieren, so dass Material jedes Dichtungsrings (2) auch nach innen, abdichtend in Richtung gegen die Außenfläche der hindurchgeführten Leitung (6) gepresst wird.

5. Verfahren nach einem der vorhergehenden Ansprüche, bei dem vor dem Anziehen der Befestigungsmittel (5) um den oder jeden Dichtungsring ein oder jeweils ein Einfassungsring (4) angebracht wird, der den äußeren Umfang des Dichtungsrings (2) umfasst, so dass beim Komprimieren des Dichtungsrings (2) das Material nicht radial nach außen verdrängt werden kann, sondern radial nach innen gezwungen wird.

6. Verfahren nach einem der vorhergehenden Ansprüche, bei dem Dichtungsringe (2) aus im Brandfall durch Aufschäumen expandierendem Material verwendet werden, wobei der Dichtungsring ausreichend Material aufweist, um den Wanddurchbruch im Brandfall durch Aufschäumen zu verschließen.

7. Verfahren nach einem der vorhergehenden Ansprüche, bei dem der oder jeder Pressring (3) aus zwei oder mehr Teilen besteht, die um die hindurchgeführte Leitung gelegt werden, um den Pressring zu bilden.

8. Verfahren nach einem der vorhergehenden Ansprüche, bei dem der oder jeder Dichtring (2) aus zwei oder mehr Teilen besteht, die jeweils um die hindurchgeführte Leitung gelegt werden, um den Dichtungsring zu bilden.

9. Verfahren nach einem der vorhergehenden Ansprüche, bei dem der oder jeder Einfassring (4) aus zwei oder mehr Teilen zusammengesetzt wird, die jeweils um den Dichtungsring gelegt werden, und miteinander verbunden werden, um den Umfangsrang des Dichtungsrings zu fassen.

10. Verfahren nach einem der vorhergehenden Ansprüche, bei dem elektrisch leitfähiges Material für den Dichtungsring (2) verwendet wird, um eine elektromagnetische Abschirmung für hindurchgeführte Kabel zu erreichen.

11. Verfahren nach einem der vorhergehenden Ansprüche, bei dem jeder Dichtungsring mit einer Mehrzahl von Durchgängen zur Hindurchführung von Leitungen vorgesehen wird.

12. Verfahren nach Anspruch 11, bei dem jeweils ein Dichtungsring mit einer Mehrzahl von im Hinblick auf die hindurchzuführenden Leitungen überdimensionierten Durchgängen verwendet wird zur Abdichtung der hindurchgeführten Leitung in dem Durchgang jeweils ein weiteres Dichtungsmittel, wie etwa eine Ringraumdichtung oder ein Dichtungsstopfen, verwendet wird.
